# EUROPÄISCHE PATENTANMELDUNG

(11) **EP 2 873 997 A1**
(43) Veröffentlichungstag der Anmeldung: **20.05.2015**
(21) Anmeldenummer: 13005389.5
(22) Anmeldetag: 15.11.2013
(51) Int. Cl.: G02B 21/34, B01L 3/00, B01L 9/00, G06M 11/00, G01N 1/31

(54) **Zählkammereinrichtung, Positioniereinrichtung für diese, Zählvorrichtung und Verfahren zur Zählung von mikroskopischen Partikeln**

(71) Anmelder: EPPENDORF AG, 22339 Hamburg (DE)
(72) Erfinder: Lapczyna, Markus, D-22339 Hamburg (DE); Wente, Wolf, D-22339 Hamburg (DE); Plüster, Wilhelm, D-22339 Hamburg (DE)
(74) Vertreter: Ricker, Mathias

(57) **Zusammenfassung**

Die Erfindung bezieht sich auf eine Zählkammereinrichtung (1) für das optische Zählen von in einem Lösungsmittel suspendierten mikroskopischen Partikeln, insbesondere biologischen Zellen, eine Positioniereinrichtung (50) zur Positionierung dieser Zählkammereinrichtung, eine Zählvorrichtung (100), welche diese Zählkammereinrichtung (1) und/oder diese Positioniereinrichtung (50) aufweist, und ein Verfahren zum Zählen von Zellen.

## Beschreibung

Die Erfindung bezieht sich auf eine Zählkammereinrichtung für das optische Zählen von in einem Lösungsmittel suspendierten mikroskopischen Partikeln, insbesondere biologischen Zellen, eine Positioniereinrichtung zur Positionierung dieser Zählkammereinrichtung, eine Zählvorrichtung, welche diese Zählkammereinrichtung und/oder diese Positioniereinrichtung aufweist, und ein Verfahren zum Zählen von Zellen.

Eine derartige Technologie dient dem Zählen von mikroskopischen Partikeln, also Partikeln, die üblicherweise unter der vergrößernden Abbildung eines optischen Mikroskops betrachtet werden. Solche Partikel weisen z.B. Durchmesser von 0,5 bis 50 µm auf. Eine häufige Aufgabe in biologischen oder biomedizinischen Laboren besteht darin, die Konzentration von Hefen, Algen oder Zellen zu ermitteln, die in einem Lösungsmittel suspendiert sind. Dazu werden oft Zählkammereinrichtungen verwendet, die manuell befüllt werden und ausgezählt werden. Eine verbreitete Zählkammereinrichtung ist die Neubauer-Zählkammer. Dabei handelt es sich um eine Glasplatte mit einer Grundfläche entsprechend der Größe eines Standard-Objektträgers, wie er in der optischen Mikroskopie verwendet wird. Diese Glasplatte weist zentral einen gegenüber der Oberseite z.B. um 0,1 mm vertieft angeordneten Zählkammerboden, kanalartige Strukturen und einen polierten Kontaktbereich in der Höhe der Oberseite auf. Zur Bildung der Zählkammer wird ein poliertes Deckgläschen oberhalb des Zählkammerbodens vom Benutzer manuell positioniert und unter Ausübung eines leichten Drucks auf den Kontaktbereich aufgelegt, so dass das Deckgläschen stabil an dem Kontaktbereich haftet. Dies erkennt der Benutzer durch Newtonsche Interferenzfarben, die sich an den Kontaktstellen zwischen dem Deckgläschen und dem Kontaktbereich ausbilden. Durch die Begrenzungsflächen, die durch die Innenseite des Deckgläschens und dem Zählkammerboden gebildet werden, ist die Zählkammer definiert, die eine definierte Höhe aufweist. Zum Befüllen der Zählkammer wird die meist wässrige Partikelsuspension z.B. durch eine Pipette auf die kanalartigen Strukturen gegeben. Durch Kapillarkräfte wird dann die Flüssigkeit in die Zählkammer gezogen, die auf diese Weise vollständig gefüllt wird. Ein markierter Bereich der Zählkammer parallel zur Hauptebene mit vorbestimmter Größe, z.B. 0,25 mm² weist durch die vorgegebene Höhe der Zählkammer ein definiertes Volumen auf, so dass die Konzentration als Anzahl der Partikel pro Volumen des Lösungsmittels durch Zählen der Partikel in diesem Bereich unter dem optischen Mikroskop ermittelt werden kann.

Das bei diesem Verfahren verwendete Deckgläschen ist zerbrechlich und muss manuell in einem vorbestimmten Bereich der Glasplatte positioniert und unter Druck auf die Glasplatte aufgebracht werden. Aus diesem Grund müssen die Deckgläschen häufig ersetzt werden, so dass sie als Verbrauchsartikel gelten. Zudem ist das bekannte Verfahren auch wegen der vielen einzelnen Handhabungsschritte aufwändig. Es besteht deshalb der Bedarf nach technischen Mitteln zum Zählen von Partikeln, deren Einsatz effizienter ist.

Aufgabe der vorliegenden Erfindung ist es, eine Zählkammereinrichtung, eine Positioniereinrichtung zur Positionierung dieser Zählkammereinrichtung, eine Zählvorrichtung, welche diese Zählkammereinrichtung und/oder diese Positioniereinrichtung aufweist, und ein Zählverfahren bereitzustellen, durch deren Einsatz das optische Zählen von in einem Lösungsmittel suspendierten mikroskopischen Partikeln, insbesondere biologischen Zellen, effizienter und reproduzierbarer wird.

Die Erfindung löst diese Aufgabe insbesondere durch die Zählkammereinrichtung gemäß Anspruch 1, die Positioniereinrichtung gemäß Anspruch 9, eine Zählvorrichtung gemäß Anspruch 12 und das Verfahren gemäß Anspruch 14. Bevorzugte Ausgestaltungen sind insbesondere Gegenstände der Unteransprüche.
Die erfindungsgemäße Zählkammereinrichtung für das optische Zählen von in einem Lösungsmittel suspendierten mikroskopischen Partikeln, insbesondere biologischen Zellen, weist auf: ein erstes Teil, das mindestens eine erste Begrenzungsfläche aufweist, ein zweites Teil, das mindestens eine zweite Begrenzungsfläche aufweist, eine Führungseinrichtung, durch die das erste und das zweite Teil zumindest in einer ersten Relativposition und einer zweiten Relativposition relativ zueinander positionierbar sind, wobei in der ersten Relativposition die mindestens eine erste und zweite Begrenzungsfläche dazu angeordnet sind, mindestens eine Zählkammer zu begrenzen, die zur Aufnahme des die Partikel enthaltenden Lösungsmittels dient, wobei mindestens eine der ersten und zweiten Begrenzungsflächen mindestens ein optisches Fenster der mindestens einen Zählkammer bildet, und die Zählkammereinrichtung dazu eingerichtet ist, dass die Partikel durch das mindestens eine optische Fenster mikroskopisch abbildbar sind.

Die Bezeichnung "mikroskopisch abbildbar" bezeichnet vorliegend die Eigenschaft der Zählkammereinrichtung, dass die gegebenenfalls in der Zählkammereinrichtung angeordneten mikroskopischen Partikel durch das mindestens eine optische Fenster der Zählkammereinrichtung hindurch in einem Bild abbildbar sind und somit das Zählen der Partikel durch Auswerten des Bildes erfolgen kann. Je nach Auflösung der optional vorgesehenen Bilderfassungseinrichtung und der optional vorgesehenen Abbildungseinrichtung kann ein geeigneter Abbildungsmaßstab verwendet werden, insbesondere ein Vergrößerungsmaßstab c, mit insbesondere 1 <= c <= 10, vorzugsweise 1 <= c <= 4.

Die erfindungsgemäße Zählkammereinrichtung hat den Vorteil, dass die Positionierung des ersten und zweiten Teils, welche in der ersten Relativposition die Zählkammer bilden, durch die Führungseinrichtung erfolgt und dadurch vereinfacht ist. Eine Fehlpositionierung mit dem Resultat der Beschädigung der Zählkammerteile, wie mit Bezug auf die bekannte Neubauer-Zählkammer beschrieben, wird dadurch vermieden. Zudem wird bei wiederholter Verwendung ein und derselben Zählkammereinrichtung die erste Relativposition durch die Führungseinrichtung immer wieder in reproduzierbarer Weise mit hoher Präzision herbeigeführt. Die Präzision bei der Einstellung der ersten Relativposition ist wichtig, um die optische Abbildung eines Zählbereichs der Zählkammer durch das mindestens eine optische Fenster in reproduzierbarer Weise mit hoher Präzision durchzuführen. Das ist insbesondere dann wichtig, wenn die Zählkammereinrichtung bei einem automatisierten Verfahren zur Zählung der Partikel unter Verwendung einer elektronischen Bildverarbeitungseinrichtung erfolgen soll. Eine Kalibrierung muss dann gegebenenfalls seltener durchgeführt werden als im Fall einer herkömmlichen Zählkammereinrichtung, bei der immer wieder unterschiedliche Bestandteile der Zählkammereinrichtung eingesetzt werden.

Die relative Beweglichkeit des ersten und zweiten Teils ermöglicht das Herbeiführen der zweiten Relativposition, in der sich insbesondere die mindestens eine erste und zweite Begrenzungsfläche zumindest nicht vollständig oder nicht senkrecht gegenüberliegen. In der zweiten Relativposition sind diese Begrenzungsflächen insbesondere stärker der Umgebung exponiert als in der ersten Relativposition. Dadurch eignet sich die zweite Relativposition insbesondere, um die Zählkammereinrichtung in der zweiten Relativposition zu reinigen, insbesondere zu sterilisieren, vorzugsweise durch Autoklavieren in einem Laborautoklaven.

Das erste Teil und das zweite Teil sind vorzugsweise beweglich zueinander angeordnet, insbesondere in der ersten und in der zweiten Relativposition. Das erste Teil und das zweite Teil sind vorzugsweise beweglich miteinander verbunden, insbesondere in der ersten und in der zweiten Relativposition, vorzugsweise in allen möglichen Relativpositionen des ersten und zweiten Teils. Das erste Teil und das zweite Teil sind vorzugsweise unlösbar miteinander verbunden, d.h. nicht ohne Beschädigung voneinander lösbar.

Zum Reinigen durch Abwischen der Begrenzungsflächen verbleibt die Zählkammer vorzugsweise in der zweiten Relativposition in der Positioniervorrichtung oder wird dieser entnommen, zum Zwecke des Sterilisierens, insbesondere Autoklavierens, ist sie vorzugsweise aus der Positioniervorrichtung entnehmbar.

Es ist auch möglich und bevorzugt, dass das erste Teil und das zweite Teil und miteinander beweglich verbindbar angeordnet sind, insbesondere indem eine dritte Relativposition des ersten Teils und des zweiten Teils vorgesehen ist, in der das erste Teil und das zweite Teil miteinander verbindbar sind und/oder voneinander lösbar sind. Zumindest in der ersten Position sind das erste und das zweite Teil vorzugsweise nicht lösbar.

Vorzugsweise weist die Zählkammereinrichtung eine Verbindungseinrichtung auf, mittels der das erste Teil und das zweite Teil vorzugsweise beweglich miteinander verbunden oder verbindbar sind, insbesondere in der ersten und in der zweiten Relativposition, vorzugsweise in allen möglichen Relativpositionen des ersten und zweiten Teils. Vorzugsweise ist die Führungseinrichtung als diese Verbindungseinrichtung eingerichtet.

Vorzugsweise besteht die Zählkammereinrichtung aus dem ersten und dem zweiten Teil. Dadurch ist eine einfache Herstellbarkeit und Bedienbarkeit gewährleistet. Insbesondere in diesem Fall, aber auch generell vorzugsweise, ist die Führungseinrichtung durch eine geeignete Gestaltung des ersten und zweiten Teils realisiert.

Die Zählkammereinrichtung kann zusätzlich zu dem ersten Teil und dem zweiten Teil mindestens ein weiteres Teil aufweisen, insbesondere die Führungseinrichtung oder ein Bestandteil der Führungseinrichtung, oder eine Halteeinrichtung, mit der die Zählkammereinrichtung insbesondere in der ersten Relativposition und/oder der zweiten Relativposition und/oder mindestens einer weiteren Relativposition gehalten werden kann. Eine solche Halteeinrichtung kann aber auch durch eine geeignete Gestaltung des ersten und zweiten Teils realisiert sein, z.B. als Rasteinrichtung. Diese Rasteinrichtung kann dadurch realisiert sein, dass das erste und zweite Teil jeweils Rastmittel aufweisen, z.B. Rastnocken und Rastaufnahmen für diese Rastnocken, um die Arretierung in der gewünschten Relativposition vorzusehen.

Die Führungseinrichtung ist vorzugsweise dazu eingerichtet, die Relativbewegung des ersten und des zweiten Teils zu führen, wenn diese insbesondere zwischen der ersten und zweiten Relativposition bewegt werden. Diese Relativbewegung ist vorzugsweise eine rotierende Bewegung, insbesondere eine schwenkende Bewegung. Es ist aber auch möglich und bevorzugt, dass diese Relativbewegung eine translatorische Bewegung ist. Die Relativbewegung kann auch eine Kombination aus Rotation und Translation sein. Vorzugsweise ist die Führungseinrichtung als Schwenkeinrichtung, insbesondere als Scharniereinrichtung ausgebildet, um eine rotierende Relativbewegung zu ermöglichen. Vorzugsweise sind das erste und das zweite Teil geeignet ausgebildet, um die Schwenkeinrichtung zu bilden, so dass zur Bildung der Schwenkeinrichtung außer dem ersten und dem zweiten Teil vorzugsweise kein weiteres separates Bauteil erforderlich ist. Dazu weist die Zählkammereinrichtung vorzugsweise eine Schwenkstiftanordnung auf. Vorzugsweise weist zu deren Realisierung das erste und/oder das zweite Teil mindestens einen Schwenkstift auf, und das erste und/oder das zweite Teil weist mindestens eine Schwenkstiftaufnahme auf, wobei das Rotieren des Schwenkstiftes in einer Schwenkstiftaufnahme möglich ist.

Es ist auch möglich, dass die Zählkammereinrichtung außer dem ersten und dem zweiten Teil mindestens ein weiteres Bauteil aufweist, um die Schwenkeinrichtung zu realisieren, z.B. eine Schwenkachse, die durch geeignete Öffnungen oder Aussparungen des ersten und/oder zweiten Teils geführt ist. Die Schwenkeinrichtung kann auch ein Schwenkteil vorsehen, das ein Scharnierelement und zwei um das Scharnierelement schwenkbare Kopplungsabschnitte aufweist, die jeweils mit dem ersten und dem zweiten Teil verbunden sind oder verbindbar sind, damit diese um die Schwenkachse des Schwenkteils schwenkbar sind.

Die Begrenzungsflächen können insbesondere an auswechselbar eingebauten Einsatzteilen vorhanden sein, die aus transparentem Material bestehen können, insbesondere aus Quarzglas oder aus Kunststoff. Der Kunststoff ist vorzugsweise so beschaffen, dass er beschädigungsfrei autoklavierbar ist, also insbesondere bei 120° C insbesondere in einer gesättigten Wasserdampfatmosphäre für einen vorbestimmten Zeitraum von z.B. 0,5 Stunden, 1,0 oder 2,0 Stunden behandelbar ist, insbesondere bei einem Umgebungsdruck von z.B. 1 bar, 2 bar oder 3 bar. In Falle der Verwendung von mindestens einem Einsatzteil dienen das erste und/oder das zweite Teil vorzugsweise als Adapterteile mit einem Aufnahmebereich zur Aufnahme des Einsatzteils. Ferner können sie einteilig und/oder nicht lösbar mit dem ersten und/oder zweiten Teil verbunden sein. Beispielsweise sind das erste und/oder das zweite Teil mit der mindestens einen ersten und/oder zweiten Begrenzungsfläche einteilig hergestellt, vorzugsweise nicht aus Kunststoff. Dabei sind das erste und/oder das zweite Teil bevorzugt einteilig miteinander verbunden und/oder geführt, z.B. über ein Filmscharnier. Einsatzteile aus Quarzglas oder auswechselbare Einsatzteile aus Kunststoff, die eine Begrenzungsfläche aufweisen, können insbesondere in den Zählkammereinrichtungen auswechselbar vorgesehen sein. Die Zählkammereinrichtungen sind insbesondere für mehrfachen Gebrauch ausgebildet. Dazu können insbesondere das erste und/oder das zweite Teil Abschnitte aus Metall aufweisen oder können teilweise daraus bestehen. Ein erstes und/oder ein zweites Teil mit Abschnitten aus Metall oder aus einem anderen, nicht optisch transparentem Material (z.B. einem opaken Kunststoff) kann als Blende zur Begrenzung des Lichtdurchganges durch die mindestens eine Zählkammer ausgestaltet sein.

Die Zählkammereinrichtung ist vorzugsweise für den mehrfachen Gebrauch ausgebildet, d.h. sie kann insbesondere für Zählvorgänge mit mindestens 5, 10, 20, 30 oder 50 verschiedenen Partikelsuspensionen verwendet werden, und ist demnach vorzugsweise mindestens ebenso oft reinigbar. Eine Zählkammereinrichtung für den mehrfachen Gebrauch kann vorzugsweise aus Metall (Aluminium, Edelstahl u.a.) oder aus einem anderen Material ausgeführt sein. Das erste und/oder das zweite Teil, insbesondere als Adapterteile, können über ein Filmscharnier einteilig gelenkig miteinander verbunden sein oder jeweils Gelenkteile haben, die miteinander zu einem Gelenk verbunden sind. Die Adapterteile können als Blenden zur Abschirmung der mindestens einen Zählkammer vor Umgebungslicht dienen. Hierfür können das erste und/oder das zweite Teil, insbesondere als Adapterteile, ganz oder teilweise aus eingefärbtem Kunststoff bestehen oder lichtundurchlässige Beschichtungen tragen.

Es ist auch möglich und in einer alternativen Ausführungsform vorgesehen, dass die Zählkammereinrichtung als Verbrauchsartikel ausgeführt ist, indem sie vorzugsweise im Wesentlichen aus Kunststoff besteht. Ein Verbrauchsartikel muss insbesondere nicht gereinigt werden, da er nach einmaliger Verwendung, insbesondere Füllung, mit einer Partikelsuspension, entsorgt wird. Auch in der Ausführungsform als Verbrauchsartikel ist die Handhabung der Zählkammereinrichtung effizient, da insbesondere das Führen des ersten und zweiten Teils die erste und zweite Relativposition durch die Führungseinrichtung erfolgt. Beispielsweise weist die Zählkammereinrichtung ein erstes und/oder zweites Teil, insbesondere als Adapterteile, aus UV- undurchlässigem Kunststoff und/oder Einsätze aus UV-transparentem Kunststoff auf.

Gemäß einer Ausgestaltung sind Mittel zum lösbaren Verriegeln und/oder Fixieren des ersten und/oder zweiten Teils in der ersten Relativposition vorhanden. Insbesondere, wenn das erste und/oder das zweite Teil Metall aufweisen, können diese Mittel eingebaute Magnete aufweisen. Insbesondere bei nicht-magnetischer Ausführung des ersten und/oder zweiten Teils können elastische Rasthaken vorhanden sein, die mit Rastkanten zusammenwirken. Die Rasthaken und Rastkanten können einteilig mit dem ersten und/oder zweiten Teil ausgebildet sein, insbesondere aus Kunststoff.

Vorzugsweise sind das erste Teil und/oder das zweite Teil im Wesentlichen plattenförmig ausgebildet, indem eine Platte jeweils in im Wesentlichen üblicher Gestaltung zwei gegenüberliegende Hauptseiten und mindestens eine Randseite oder, insbesondere im Falle einer im Wesentlichen quaderförmigen Platte, vier Randseiten aufweist. Vorzugsweise weist eine Hauptseite des plattenförmigen ersten und/oder plattenförmigen zweiten Teils die mindestens eine Begrenzungsfläche auf, die gegenüber der Hauptseite zumindest abschnittsweise oder vollständig vertieft angeordnet ist. Im Falle der planaren Gestaltung einer Begrenzungsfläche ist die Ebene der planaren Begrenzungsfläche vorzugsweise parallel zur Hauptseite angeordnet. Falls das erste Teil und das zweite Teil rotierbar zueinander angeordnet sind, liegt die Rotationsachse vorzugsweise parallel der Hauptseite des plattenförmigen ersten Teils und/oder des plattenförmigen zweiten Teils. Die Rotationsachse kann aber auch senkrecht zu dieser Hauptseite angeordnet sein, so dass das erste und zweite Teil insbesondere scherenartig gegeneinander rotierbar sind.

Vorzugsweise weist das erste Teil und/oder das zweite Teil mindestens ein Abstandselement auf, z.B. ein Sockelelement oder einen Vorsprungsabschnitt, das in der ersten Relativposition das erste und zweite Teil in einem Abstand hält, der insbesondere die Relativbewegung in der ersten Relativposition blockiert. Dieser Abstand kann insbesondere d1 sein. Das mindestens eine Abstandselement kann integral mit der Führungseinrichtung ausgeführt sein, z.B. als Anschlag, der insbesondere die Relativbewegung in der ersten Relativposition blockiert. Vorzugsweise ist die mindestens eine erste Begrenzungsfläche planar, und zumindest in der ersten Relativposition vorzugsweise koplanar mit der Innenseite, d.h. einer Hauptseite, des ersten Teils. Vorzugsweise ist die mindestens eine zweite Begrenzungsfläche planar, und zumindest in der ersten Relativposition vorzugsweise koplanar mit der Innenseite, d.h. einer Hauptseite, des zweiten Teils. Falls zwei in der ersten Relativposition gegenüberliegende Begrenzungsflächen, nämlich eine erste und ein zweite Begrenzungsfläche, jeweils koplanar mit der planaren Hauptseite des plattenförmigen Teils ausgebildet sind, wird die mindestens eine Zählkammer im Wesentlichen durch den Spalt gebildet, der zwischen den planaren Hauptseiten besteht, und dessen Breite insbesondere d1 sein kann. Es ist dabei auch möglich, dass eine Begrenzungsfläche aus einer Hauptseite hervorsteht, solange die Zählkammereinrichtung dazu ausgebildet ist, dass in der ersten Relativposition die gewünschte mindestens eine Zählkammer ausgebildet wird.

Vorzugsweise ist die Führungseinrichtung als Translationseinrichtung ausgebildet, um eine translative Relativbewegung zu ermöglichen. Diese Translationseinrichtung ist vorzugsweise dazu eingerichtet, das vorzugsweise plattenförmige erste Teil und/oder das vorzugsweise plattenförmige zweite Teil parallel der Hauptseite der Platte translativ zu führen. Es ist aber auch möglich, dass die Translation nur abschnittsweise oder nicht vollständig parallel der Hauptseite geführt wird oder vorzugsweise senkrecht zur Hauptseite geführt wird.

Vorzugsweise sind das erste und das zweite Teil geeignet ausgebildet, um die Translationseinrichtung zu bilden, so dass zur Bildung der Translationseinrichtung außer dem ersten und dem zweiten Teil vorzugsweise kein weiteres separates Bauteil erforderlich ist. Vorzugsweise weist zur Realisierung der Translationseinrichtung das erste und/oder das zweite Teil mindestens einen oder mehrere Translationsführungsabschnitte auf, insbesondere Hakenelemente, Schlaufenelemente, Gleitelemente, Schienenelemente, Öffnungsabschnitte, Aussparungsabschnitte oder Stiftelemente durch die die translative Relativbewegung des ersten Teils und des zweiten Teils ermöglicht wird und geführt wird.

Es ist auch möglich, dass die Zählkammereinrichtung außer dem ersten und dem zweiten Teil mindestens ein weiteres Bauteil aufweist, um die Translationseinrichtung zu realisieren, z.B. ein Translationsverbindungsteil, durch welches das erste und das zweite Teil zur Durchführung der translativen Relativbewegung verbunden und geführt werden.

Vorzugsweise ist mindestens eine der mindestens einen ersten und mindestens einen zweiten Begrenzungsfläche planar ausgebildet. Vorzugsweise sind mindestens eine erste planare Begrenzungsfläche und mindestens eine zweite planare Begrenzungsfläche zumindest in der ersten Relativposition planparallel angeordnet. Auf diese Weise lässt sich mindestens eine Zählkammer realisieren, deren planparallele Seiten ein Volumen definieren, das proportional zur Ausdehnung der Zählkammer in allen in der Ebene der Begrenzungsfläche gelegenen Richtungen ist. Jeder gedachte Schnitt mit einem Stempel mit konstanter Stempelflächengröße senkrecht durch die Begrenzungsflächen der Zählkammer schneidet aus der Zählkammer dasselbe Volumen heraus, was für den Einsatz der Zählkammereinrichtung sehr effizient ist.

Vorzugsweise ist die Zählkammereinrichtung dazu ausgebildet, dass mindestens eine erste und eine zweite Begrenzungsfläche in der ersten Relativposition planparallel angeordnet sind in einem vorbestimmten Abstand d1 gehalten werden. Vorzugsweise ist d1 aus einem der folgenden jeweils bevorzugten Bereichen ausgewählt: 0,001 mm <= d1 <= 0,01 mm; 0,01 mm <= d1 <= 0,15 mm; 0,01 mm <= d1 <= 0,20 mm; 0,1 mm <= d1 <= 1,0 mm, vorzugsweise 0,05 <= d1 <= 0,5 mm, vorzugsweise 0,05 <= d1 <= 0,4 mm, vorzugsweise 0,05 <= d1 <= 0,2 mm, vorzugsweise d1=0,1 mm. Diese Abstände eigenen sich besonders, um mikroskopische Partikel flächig anzuordnen, insbesondere biologische Zellen, Hefen, Pilze, die je nach Typ unterschiedliche Durchmesser haben können. Zellen, die mit Zählkammern gezählt werden, haben in der Regel Durchmesser zwischen 1 - 40 µm, während Oocyten wesentlich größer sein können. Der Wert d1 kann insbesondere auf den Partikeldurchmesser bzw. Zelldurchmesser abgestimmt sein: durch die genannten geringen Werte d1 kann eine Partikelstapelung bzw. Zellstapelung senkrecht zur Plattenebene verhindert werden, so dass die Partikel vereinzelt und besser zählbar werden.

Vorzugsweise ist die Zählkammereinrichtung dazu ausgebildet, dass mindestens eine erste und eine zweite Begrenzungsfläche, die jeweils insbesondere planar sein können, in einer zweiten Relativposition, z.B. in einem vorbestimmten Abstand d2 gehalten werden können. Vorzugsweise befindet sich in der ersten Relativposition des ersten und zweiten Teils der Zählkammereinrichtung ein erster Punkt auf der mindestens einen ersten Begrenzungsfläche in einem vorbestimmten Abstand D von einem zweiten Punkt auf der mindestens einen zweiten Begrenzungsfläche, wobei in der ersten Relativposition D=d1, und wobei in einer zweiten Relativposition dieser Abstand D=d2 vorzugsweise größer ist als der Abstand D=d1 in der ersten Relativposition, also d2>d1, sowie die Begrenzungsflächen in einer bevorzugten Ausführungsform der Zählkammereinrichtung nicht mehr parallel zueinander sind, sondern in einem Öffnungswinkel zueinander stehen. Durch den größeren Abstand d2 eignet sich die zweite Relativposition besonders, um die erste und zweite Begrenzungsfläche zu reinigen, insbesondere zu sterilisieren, insbesondere mittels eines Autoklaven.

Es kann auch mindestens eine Begrenzungsfläche der Zählkammer vorgesehen sein, die insbesondere nicht planar ist, die z.B. einen gekrümmten Verlauf aufweist.

Vorzugsweise ist vorgesehen, dass mindestens ein Abschnitt des ersten Teils oder des zweiten Teils als optisches Mittel ausgebildet ist, das aus der Gruppe der optischen Mittel ausgewählt ist umfassend Linsen, Filter, Reflektoren, Polarisatoren. Dieser mindestens eine Abschnitt ist vorzugsweise im optischen Pfad angeordnet, der sich bei einer Abbildung des mindestens einen Zählbereichs durch das mindestens eine optische Fenster ergibt. Dieser mindestens eine Abschnitt ist vorzugsweise gegenüberliegend mindestens einer Begrenzungsfläche angeordnet. Durch Vorsehen des mindestens einen optischen Mittels kann die Abbildungsqualität und damit der Zählvorgang verbessert werden.

Eine Begrenzungsfläche eines ersten oder zweiten Teils, welches als Plattenelement ausgeführt ist, kann gegenüber einer Hauptseite der Platte vertieft angeordnet sein. Die Hauptseite des ersten Teils, die in der ersten Relativposition der Hauptseite des zweiten Teils gegenüberliegt, heißt Innenseite des ersten Teils, ihre andere Seite heißt Außenseite des ersten Teils. Entsprechendes gilt für die Definition der Innenseite und Außenseite des zweiten Teils. In der ersten Relativposition kontaktieren sich vorzugsweise erste Kontaktbereiche des ersten Teils und zweite Kontaktbereiche des zweiten Teils. Dieser Kontakt sorgt dafür, dass die sich gegenüberliegenden mindestens eine erste und mindestens eine zweite Begrenzungsfläche in einem präzise definierten Abstand liegen. Falls das Material der Kontaktbereiche, oder des ersten oder zweiten Teils ein Glas ist, ist bevorzugt, dass die Kontaktbereiche plangeschliffen und poliert sind. Auch im Fall von Kunststoff ist bevorzugt, dass die Kontaktbereiche eine geringe Rauheit aufweisen.

Es ist möglich und bevorzugt, dass mindestens eine erste Begrenzungsfläche gegenüber der Innenseite des ersten Teils um eine Distanz a1 > 0 in Richtung senkrecht zur Innenseite versenkt angeordnet ist, oder nicht versenkt angeordnet ist, d.h. a1=0. Die zweite Begrenzungsfläche, die in der ersten Relativposition dieser ersten Begrenzungsfläche gegenüberliegt, kann gegenüber der Innenseite um eine Distanz a2 > 0 in Richtung senkrecht zur Innenseite versenkt angeordnet sein, oder kann nicht versenkt angeordnet sein, d.h. a2=0. Die Höhe H der Zählkammer in Richtung senkrecht zu den in der ersten Relativposition vorzugsweise planparallel angeordneten Innenseiten ergibt sich vorzugsweise aus H=a1+a2, falls die Kontaktbereiche des ersten und zweiten Teils jeweils der Höhe der Innenseite entsprechen. Vorzugsweise ist entweder a1=0 oder a2=0, da in diesem Fall zumindest eine planare Innenseite entweder des ersten oder des zweiten Teils realisiert werden kann. Die der planaren Innenseite gegenüberliegende Außenseite kann ebenfalls planar ausgeführt sein. Auf diese Weise wird ein optisches Fenster ohne Kanten geschaffen, das eine möglichst fehlerfreie Abbildung des Zählbereichs erlaubt. Eine kantenfreie Gestaltung des ersten oder zweiten Teils ist auch bevorzugt, wenn dieses auf der Beleuchtungsseite liegt.

Es ist auch bevorzugt, dass das erste und das zweite Teil, insbesondere zumindest im Bereich der mindestens einen Zählkammer, identisch geformt sind. Dadurch können Zählungen in reproduzierbarer Weise unabhängig davon durchgeführt werden, ob die Beleuchtungseinrichtung und/oder die Abbildungseinrichtung dem ersten oder dem zweiten Teil zugewandt ist.

Es ist möglich und bevorzugt, dass die mindestens eine erste und/oder zweite Begrenzungsfläche zumindest abschnittsweise flüssigkeitsbenetzend, insbesondere hydrophil, und/oder flüssigkeitsabweisend, insbesondere hydrophob, gestaltet ist. Dies kann durch eine Beschichtung oder chemische Funktionalisierung der ersten und/oder zweiten Begrenzungsfläche erfolgen, durch eine Ausformung, insbesondere Mikrostrukturierung oder Nanostrukturierung, der Oberfläche und/oder durch eine entsprechende Gestaltung der Rauheit der Oberfläche. Es ist möglich und bevorzugt, dass die mindestens eine erste und/oder zweite Begrenzungsfläche einen Oberflächenbereich mit unterschiedlicher Benetzbarkeit aufweist. Der Oberflächenbereich kann mindestens einen flüssigkeitsbenetzenden und mindestens einen flüssigkeitsabweisenden Abschnitt aufweisen, wobei diese Flüssigkeit vorzugsweise Wasser oder ein wässriges Lösungsmittel ist. Durch die Gestaltung der Benetzbarkeit, insbesondere durch Vorsehen eines Oberflächenbereichs mit unterschiedlicher Benetzbarkeit, kann die Positionierung einer flüssigen Partikelsuspension in einem zumindest abschnittsweise flüssigkeitsbenetzend und/oder flüssigkeitsabweisend gestalteten Bereich gesteuert werden, wenn diese in diesem Bereich angeordnet wird, indem sie dort z.B. vom Benutzer manuell positioniert wird.

Vorzugsweise ist eine erste und/oder zweite Begrenzungsfläche in ihrem Zentrum mit einem flüssigkeitsbenetzenden zentralen Flächenteil ausgeführt, um das herum ein flüssigkeitsabweisender äußerer Flächenteil vorhanden ist. Der zentrale Flächenanteil ist vorzugsweise kreisförmig, der äußere Flächenanteil ist vorzugsweise kreisringförmig. Die flüssigkeitsbenetzenden und flüssigkeitsabweisenden Eigenschaften der zentralen und äußeren Flächenteile können durch Beschichtungen hergestellt werden. Der zentrale und äußere Flächenteil gehen vorzugsweise kontinuierlich fluchtend, vorzugsweise koplanar, ineinander über. Zwischen dem zentralen und äußeren Flächenteil besteht vorzugsweise insbesondere keine Kante, kein Vorsprung und keine Vertiefung, die beim Reinigen der Begrenzungsflächen stören könnte. Der zentrale und/oder äußere Flächenteil können transparent sein. Vorzugsweise ist der zentrale Bereich transparent und bildet den Bestandteil der mindestens einen Zählkammer. Am flüssigkeitsabweisenden bzw. hydrophoben Flächenteil hat der Flüssigkeitstropfen einen großen Kontaktwinkel, insbesondere größer 90°. Infolgedessen steht er hoch über die Begrenzungsfläche hinaus. Im flüssigkeitsbenetzenden bzw. hydrophilen Flächenteil wird der Tropfen hingegen festgehalten bzw. verankert.

Vorzugsweise sind die sich in der ersten Relativposition gegenüberliegenden Flächenanteile der mindestens einen ersten und zweiten Begrenzungsfläche mit derselben Benetzbarkeit ausgestaltet. Infolgedessen entstehen in der Regel keine flachen, sondern etwa halbkugelförmige Flüssigkeitstropfen, so dass beim Zusammenklappen des ersten und zweiten Teils ein auf eine Begrenzungsfläche aufgebrachter Tropfen die andere Begrenzungsfläche sicher benetzt oder auf beide Begrenzungsflächen aufgebrachte Tropfen sich sicher vereinigen. Infolgedessen entsteht eine definierte Flüssigkeitssäule und damit eine definierte Schichtdicke der in der mindestens einen Zählkammer enthaltenen Partikelsuspension, wobei diese Schichtdicke insbesondere d1 ist.

Zur Begrenzung der Tropfenausbreitung kann auch ein planares Podest mit geringer Fläche auf der mindestens einen ersten oder zweiten Begrenzungsfläche angeordnet sein. Das planare Podest verhindert die Ausdehnung des Tropfens aufgrund von dessen Oberflächenspannung. Dies bewirkt einen Anstieg der Tropfenhöhe und es kann eine Reduzierung der erforderlichen Probenmenge erzielt werden.

Das erste Teil kann auf der Innenseite eine Kanalstruktur aufweisen, welche die vorzugsweise zentral an der Innenseite angeordnete Zählkammer, oder die mindestens eine erste Begrenzungsfläche, mit dem Randbereich des ersten Teils verbindet. Zusätzlich oder alternativ kann das zweite Teil kann auf der Innenseite eine Kanalstruktur aufweisen, welche die vorzugsweise zentral an der Innenseite angeordnete Zählkammer, oder die mindestens eine zweite Begrenzungsfläche, mit dem Randbereich des zweiten Teils verbindet. Diese Kanalstruktur dient jeweils dazu, um das die mikroskopischen Partikel enthaltende Lösungsmittel mittels Kapillarkraft ausgehend vom Randbereich in die zentral gelegene Zählkammer zu transportieren. Es ist aber auch möglich und bevorzugt, dass eine andere Kanalstruktur oder keine Kanalstruktur vorgesehen ist. In letzterem Fall kann das die mikroskopischen Partikel enthaltende Lösungsmittel in einer zweiten Relativposition direkt auf die mindestens eine erste oder zweite Begrenzungsfläche aufgebracht werden, bevor die erste Relativposition herbeigeführt wird, in der das Lösungsmittel die Zählkammer füllt und überflüssiges Lösungsmittel aus der Zählkammereinrichtung herausgedrängt wird.

Die Zählkammereinrichtung kann mehrere Zählkammern aufweisen, und kann somit mehrere erste und/oder zweite Begrenzungsflächen aufweisen.

Das optische Fenster der Zählkammereinrichtung verbindet deren Innenvolumen optisch mit dem Außenraum um die Zählkammereinrichtung, um insbesondere einen Zählbereich optisch in den Außenraum abzubilden, z.B. auf eine Bilderfassungseinrichtung oder zur Beobachtung durch das Auge eines Benutzers. Das optische Fenster ist zumindest teilweise transparent, um diese Abbildung zu ermöglichen. Dies wird vorzugsweise dadurch erreicht, dass das Material, welches den Abschnitt des ersten und/oder zweiten Teils bildet, der zwischen Außenraum und der Begrenzungsfläche liegt, transparent ist, indem es z.B. aus einem Glas oder einem transparenten Kunststoff besteht.

Vorzugsweise ist mindestens eine Begrenzungsfläche ein Bestandteil eines optischen Fensters. Vorzugsweise ist die mindestens eine erste Begrenzungsfläche ein Bestandteil eines optischen Fensters und/oder vorzugsweise ist die mindestens eine zweite Begrenzungsfläche ein Bestandteil eines optischen Fensters. Die Abbildung kann dadurch erfolgen, indem Licht durch die mindestens eine erste und/oder zweite Begrenzungsfläche tritt, um von einer Bilderfassungseinrichtung erfassbar zu sein. Vorzugsweise ist ein die mindestens eine erste Begrenzungsfläche tragender Abschnitt des ersten Teils plattenförmig ausgebildet, bildet insbesondere einen Bestandteil eines optischen Fensters und wird als erster Fensterabschnitt bezeichnet. Vorzugsweise ist ein die mindestens eine zweite Begrenzungsfläche tragender Abschnitt des zweiten Teils plattenförmig ausgebildet, bildet insbesondere einen Bestandteil eines optischen Fensters und wird als zweiter Fensterabschnitt bezeichnet.

Die Dicke D_{F1} des ersten Fensterabschnitts und/oder die Dicke D_{F2} zweiten Fensterabschnitts ist vorzugsweise so eingerichtet, dass eine optische Abbildung des mindestens einen Zählbereichs durch diesen ersten oder zweiten Fensterabschnitt möglich ist. Zu diesem Zweck beträgt die Dicke und/oder die Dicke jeweils vorzugsweise 0,1 mm <= D_{F1,} D_{F2} <= 15,0 mm, vorzugsweise 0,1 mm <= D_{F1,} D_{F2} <= 10,0 mm, vorzugsweise 1,0 mm <= D_{F1,} D_{F2} <= 5,0 mm, vorzugsweise 1,0 mm <= D_{F1,} D_{F2} <= 3,0 mm. Insbesondere in diesen Fällen ist die Dicke bzw. Höhe der mindestens einen Zählkammer d1 so gewählt, dass vorzugsweise 0,05 <= d1 <= 0,5 mm, vorzugsweise 0,05 <= d1 <= 0,4 mm, vorzugsweise 0,05 <= d1 <= 0,2 mm, vorzugsweise d1=0,1 mm. Durch diese Maße wird eine optische Abbildung des mindestens einen Zählbereichs durch das mindestens eine optische Fenster ermöglicht, und durch die genannten geringen Werte d1 kann eine Partikelstapelung bzw. Zellstapelung senkrecht zur Plattenebene verhindert werden, so dass die Partikel vereinzelt und besser zählbar werden.

Es ist möglich und bevorzugt, dass D_{F1} = D_{F2}, um eine symmetrische Gestaltung und damit flexible Verwendung der Zählkammereinrichtung zu ermöglichen. Es ist aber auch bevorzugt, dass D_{F1} <> D_{F2}, also z.B. D_{F1} < D_{F2} oder D_{F1} > D_{F2}. Dadurch kann ein Fensterabschnitt insbesondere stabiler oder bruchfester als der andere Fensterabschnitt ausgebildet werden und ein Fensterabschnitt kann durch eine geringere Dicke die Abbildung weiter erleichtern bzw. die Abbildungsqualität verbessern.

Es ist möglich und bevorzugt, dass der erste Fensterabschnitt an der Außenseite, d.h. an der der mindestens einen ersten Begrenzungsfläche gegenüberliegenden Seite, eine funktionelle Ausgestaltung aufweist. Ebenso ist es möglich und bevorzugt, dass der zweite Fensterabschnitt an der Außenseite, d.h. an der der mindestens einen zweiten Begrenzungsfläche gegenüberliegenden Seite, eine funktionelle Ausgestaltung aufweist. Die funktionelle Ausgestaltung kann eine Beschichtung sein, oder eine Mikro- oder Nanostrukturierung. Die funktionelle Ausgestaltung, insbesondere die Beschichtung kann eine Antireflex-Funktion haben, um den Streulichtanteil und/oder andere Artefakte wie z.B. Vielfachreflexionen an den Grenzflächen zu reduzieren. Eine Beschichtung kann insbesondere in Dünnschichttechnik hergestellt sein, insbesondere durch physikalische Gasphasenabscheidung, z.B. thermisches Verdampfen oder Sputtern. Die funktionelle Ausgestaltung könnte alternativ oder zusätzlich eine dichroitische Filterschicht beinhalten.

Vorzugsweise weist die Zählkammereinrichtung eine erste Begrenzungsfläche und eine zweite Begrenzungsfläche auf, die jeweils Bestandteil eines optisches Fenster sind oder dieses bilden und sich in der ersten Relativposition gegenüberliegen, so dass ein senkrecht durch das optische Fenster der ersten Begrenzungsfläche tretendes Licht auch durch das optische Fenster der zweiten Begrenzungsfläche treten kann, nachdem es die Zählkammer durchquert hat. Diese Konfiguration ist besonders bevorzugt, um den Zählbereich in einer Durchlichtanordnung abzubilden, bei der in der ersten Relativposition die Beleuchtungseinrichtung gegenüber der Außenfläche des die mindestens eine Zählkammer bildenden Abschnitts des ersten Teils angeordnet ist und die Abbildungseinrichtung gegenüber der Außenfläche des die mindestens eine Zählkammer bildenden Abschnitts des zweiten Teils angeordnet ist, oder umgekehrt.

Es ist aber auch möglich, die Beleuchtungseinrichtung und die Abbildungseinrichtung auf derselben Seite entweder des ersten Teils oder des zweiten Teils anzuordnen, um insbesondere eine Auflichtanordnung zu realisieren oder eine Anordnung mit schrägem optischem Pfad zu realisieren, bei der z.B. Licht schräg zu der Richtung auf die Zählkammer einfällt, die senkrecht zum ersten oder zweiten Teil liegt, und/oder bei der der Lichtaustritt in Richtung der Abbildungseinrichtung schräg ist.

Die Richtungsangabe "gegenüberliegend" bedeutet im Rahmen dieser Erfindung "senkrecht gegenüberliegend". Die Angabe "senkrecht zum ersten oder zweiten Teil" bezieht sich auf die erste Position und den Fall, dass das erste oder zweite Teil plattenartig ist, so dass die senkrechte Richtung die Richtung senkrecht auf eine Hauptseite der Platte bezeichnet. Im Falle einer planaren Begrenzungsfläche bedeutet die Angabe "senkrecht zum ersten oder zweiten Teil" vorzugsweise die Richtung senkrecht zur Begrenzungsfläche, in der ersten Relativposition.

Vorzugsweise sind die Zählkammereinrichtung und das mindestens eine optische Fenster so eingerichtet, dass durch mindestens ein optisches Fenster mindestens ein Zählbereich der Zählkammer in mindestens einem Bild mikroskopisch abbildbar ist, so dass das Zählen der in dem Bild gezeigten mikroskopischen Partikel ermöglicht wird. Dazu sind die mindestens eine erste oder zweite Begrenzungsfläche, sowie eine dieser Begrenzungsfläche jeweils gegenüberliegende Außenfläche des ersten oder zweiten Teils jeweils transparent, insbesondere zumindest -oder ausschließlich- im Bereich der Wellenlängen des Lichts, die für die Beleuchtung und/oder für die Abbildung verwendet werden.

Der Zählbereich ist vorzugsweise ein Raumbereich in der Zählkammer, der dazu geeignet ist, eine zu zählende Anzahl mikroskopischer Partikel aufzunehmen. Der Zählbereich ist insbesondere ein Ausschnitt dieser Zählkammer. Der Zählbereich weist vorzugsweise ein vorbestimmtes Volumen auf, das insbesondere bei planparallel gegenüberliegenden Begrenzungsflächen der Zählkammer durch das Produkt aus der parallel zu den Begrenzungsflächen gelegenen Fläche des Zählbereichs mit der Höhe des Zählbereichs gegeben ist, wobei die Höhe des Zählbereichs vorzugsweise dem Abstand der planparallelen Begrenzungsflächen in Richtung senkrecht zu diesen entspricht, oder dessen Volumen errechnet wird aus dem Produkt aus der Höhe des Zählbereiches und der abgebildeten und/oder beobachteten Teilfläche der mit Probenlösung gefüllten Zählkammer.

Vorzugsweise sind die Zählkammereinrichtung und die von der mindestens einen ersten und zweiten Begrenzungsfläche begrenzte mindestens eine Zählkammer dazu ausgebildet, in der ersten Relativposition ein Volumen V eines -insbesondere wässrigen-Lösungsmittels durch Kapillarkräfte zwischen der ersten und zweiten Begrenzungsfläche zu halten, wobei vorzugsweise 1,0 µl <= V <= 100 µl.

Vorzugsweise ist die Zählkammereinrichtung zu Sterilisierzwecken autoklavierbar ausgebildet. Dass bedeutet, dass die Zählkammereinrichtung aus einem oder mehreren Materialien besteht, das - jeweils - seine physikalischen Eigenschaften nicht ändert, wenn die Zählkammereinrichtung den Umgebungsbedingungen ausgesetzt wird, die üblicherweise beim Autoklavieren von Gegenständen in einem Laborautoklaven zum Sterilisieren dieser Gegenstände eingestellt werden. Solche Umgebungsbedingungen sind insbesondere die Kombination aus einer gesättigten Wasserdampfatmosphäre, einer Temperatur von bis zu 135°C, und einem Druck von bis zu 3,5 bar, über einen Zeitraum von bis zu 2 Stunden. Solche Bedingungen übersteht die Zählkammereinrichtung vorzugsweise beschädigungsfrei über ihre gesamte Produktlebenszeit, die insbesondere bis zu 500 oder 1000 solcher Sterilisiervorgänge im Autoklaven vorsieht.

Die Zählkammereinrichtung ist beispielsweise aus Metall (z.B. Aluminium oder Edelstahl) und/oder aus einem oder mehreren Kunststoffen bzw. Hartkunststoffen (z.B. Polystyrol, PVC, Polypropylen, Polyethylen) hergestellt oder weist solche Materialien auf. Die Begrenzungsflächen oder die Abschnitte des ersten und/oder zweiten Teils, welche die Begrenzungsflächen aufweisen, sind z.B. aus optisch transparenten Kunststoffen (z.B. Topas oder Polystyrol), einem Glas, z.B. Quarzglas oder aus einem anderen optisch transparenten Glas (z.B. BK 7) hergestellt. Vorzugsweise besteht die Zählkammereinrichtung nur aus einem Material, oder nur aus zwei oder drei unterschiedlichen Materialien und/oder besteht vorzugsweise nur aus dem ersten und dem zweiten Teil.

Vorzugsweise ist die Zählkammereinrichtung ein vom Benutzer einhändig transportables Bauteil, Vorzugsweise ist die Zählkammereinrichtung so geformt, dass sie insbesondere in der ersten Relativposition insbesondere vollständig in einen gedachten Quader passt, dessen Volumen jeweils vorzugsweise kleiner oder gleich ist als 3000, 6000, 8000 oder 10000 mm³, insbesondere eine Länge L_{Q}, eine Breite B_{Q} und eine Höhe H_{Q} aufweist, wobei vorzugsweise 30,0 mm <= L_{Q} <= 150,0 mm, oder 30,0 mm <= L_{Q} <= 60,0 mm und/oder 5,0 mm <= B_{Q} <= 50,0 mm oder 5,0 mm <= B_{Q} <= 20,0 mm, und/oder 5,0 mm <= H_{Q} <= 50,0 mm oder 5,0 mm <= H_{Q} <= 20,0 mm.

Die Messflächen können auch alternativ so ausgestattet sein, z. B. durch entsprechende Oberflächengestaltung, dass mehrere Proben auf ihr angeordnet sein können. Die Proben können verschieden sein oder als identische Proben auf die Messfläche aufgebracht werden.
Die Erfindung betrifft auch eine Positioniereinrichtung zur Positionierung einer erfindungsgemäßen Zählkammereinrichtung in allen genannten bevorzugten Ausgestaltungen, in einer vorbestimmten Beleuchtungsposition, aufweisend ein Basisteil, das einen Aufnahmebereich zur Aufnahme und Positionierung mindestens einer erfindungsgemäßen Zählkammereinrichtung, die in der ersten Relativposition angeordnet ist, in der Beleuchtungsposition aufweist, und wobei die Positioniereinrichtung eine Beleuchtungseinrichtung aufweist und der Aufnahmebereich und die Beleuchtungseinrichtung so ausgebildet und relativ zueinander so angeordnet sind, dass in der Beleuchtungsposition die mindestens eine Zählkammer der Zählkammereinrichtung durch die Beleuchtungseinrichtung beleuchtbar ist, wenn die Zählkammereinrichtung im Aufnahmebereich angeordnet ist.

Der Aufnahmebereich ist vorzugsweise dazu ausgebildet, die Zählkammereinrichtung formschlüssig aufzunehmen, um diese eindeutig zu positionieren, vorzugsweise in seitlicher, also vorzugsweise in horizontaler Richtung, also senkrecht zur Gravitation. Beispielsweise kann die Zählkammereinrichtung in der ersten Relativposition eine im Wesentlichen quaderförmige Außenkontur aufweisen. Dann weist vorzugsweise der Aufnahmebereich eine Innenkontur auf, um diese Außenkontur formschlüssig aufzunehmen. Die Zählkammereinrichtung kann auch mindestens einen Vertiefungsabschnitt und/oder einen Vorsprungsabschnitt aufweisen, die zum Eingriff mit mindestens einem dazu komplementären, d.h. passenden Vorsprungsabschnitt und/oder Vertiefungsabschnitt des Basisteils kommen, wenn die Zählkammereinrichtung im Aufnahmebereich angeordnet wird. Auch durch solche Mittel kann die eindeutige Positionierung erreicht werden, vorzugsweise in seitlicher, also vorzugsweise in horizontaler Richtung. Dabei liegt die Zählkammereinrichtung vorzugsweise auf dem Basisteil auf, wird also von diesem nach unten (also in Richtung der Gravitation) gehalten.

Durch die Positionierung des Aufnahmebereichs gegenüber der Beleuchtungseinrichtung ist die Zählkammereinrichtung immer eindeutig gegenüber der Beleuchtungseinrichtung positioniert, wenn die Zählkammereinrichtung in Beleuchtungsposition angeordnet ist. Das ist besonders vorteilhaft für die Reproduzierbarkeit der Ergebnisse bei der bildverarbeitungsgestützten automatischen Partikelzählung, die mit der erfindungsgemäßen Zählvorrichtung durchgeführt wird.

Vorzugsweise weist die Beleuchtungseinrichtung mindestens eine Lichtquelle auf, insbesondere eine LED, die in der Beleuchtungsposition gegenüberliegend dem mindestens einen optischen Fenster angeordnet ist und mit der in der Beleuchtungsposition die mindestens eine Zählkammer der Zählkammereinrichtung beleuchtbar ist. Dadurch kann die Zählkammer homogen ausgeleuchtet werden. Die LED emittiert vorzugsweise blaues Licht oder emittiert vorzugsweise Licht im Wellenlängenbereich von 465 nm- 495 nm.

Vorzugsweise weist die Positioniereinrichtung außer dem Basisteil und der Beleuchtungseinrichtung weitere Teile auf, um optionale Funktionen der Positioniereinrichtung zu implementieren, z.B. einen Öffnungsmechanismus, mit dem die Zählkammer geöffnet werden kann, ohne dass der Benutzer die Zählkammereinrichtung berühren muss.

Vorzugsweise erstreckt sich der Aufnahmebereich entlang einer Ebene, entlang der sich auch das mindestens eine optische Fenster der Zählkammereinrichtung in der Beleuchtungsposition erstreckt, wobei die Beleuchtungseinrichtung dazu eingerichtet ist, ein kollimiertes Licht senkrecht zu dieser Ebene auszusenden, was auch als telezentrische Beleuchtung bezeichnet wird. Dadurch gelingt eine besonders homogene Ausleuchtung der Zählkammer. Das ist für die bildgestützte elektronische Auszählung der Zellen im Zählbereich wichtig, um in jedem Bereich des Zählbereichs einen konstanten Kontrast zwischen abzubildenden Partikeln und Bildhintergrund zu schaffen. Durch Verwenden mindestens eines Schwellwerts bei der elektronischen Bildauswertung können die Partikel zuverlässig gezählt werden.

Vorzugsweise weist die Beleuchtungseinrichtung mindestens eine weitere Lichtquelle auf, mit der in der Beleuchtungsposition die mindestens eine Zählkammer der Zählkammereinrichtung beleuchtbar ist..

Vorzugsweise ist die Positioniereinrichtung ein vom Benutzer einhändig transportables Bauteil, das insofern insbesondere vollständig in einen gedachten Quader passt, dessen Volumen jeweils vorzugsweise kleiner oder gleich ist als 250, 500, 1000 oder 15000 cm³.
Die Erfindung betrifft ferner eine Zählvorrichtung zum Zählen von mikroskopischen Partikeln, insbesondere biologischen Zellen, die in einem Lösungsmittel suspendiert sind, das in der mindestens einen Zählkammer einer -insbesondere erfindungsgemäß gestalteten- Zählkammereinrichtung angeordnet ist, wobei die Zählvorrichtung aufweist: eine erfindungsgemäße Positioniereinrichtung und/oder eine erfindungsgemäße Zählkammereinrichtung, eine Abbildungseinrichtung zum mikroskopischen Abbilden mindestens eines Zählbereichs der mindestens einen Zählkammer, vorzugsweise eine Bilderfassungseinrichtung zum Erfassen des mindestens einen Zählbereichs in mindestens einem Bild, vorzugsweise eine elektronische Bildauswerteeinrichtung, durch die das mindestens eine Bild auswertbar ist, um mindestens eine Anzahl von in mindestens einem Bild abgebildeten Partikeln durch Zählen zu ermitteln.

Vorzugsweise ist die Positioniereinrichtung und/oder die Zählkammereinrichtung der Zählvorrichtung ein modulares Bauteil, das insbesondere vom Benutzer einhändig transportabel ist. Ein modulares Bauteil ist ein separates Bauteil, das im vorliegenden Fall unabhängig von der Zählvorrichtung angeordnet sein kann. Das modulare Bauteil kann zum Zweck des Zusammenwirkens mit der Zählvorrichtung an der vorbestimmten Position der Zählvorrichtung angeordnet werden.

Die Abbildungseinrichtung weist vorzugsweise mindestens ein optisches Mittel auf, das aus der Gruppe der optischen Mittel ausgewählt ist umfassend Linsen, Filter, Reflektoren, Polarisatoren. Vorzugsweise ist die Abbildungseinrichtung dazu ausgebildet, den Zählbereich um einen Faktor c vergrößert abzubilden, wobei vorzugsweise 1,0 <= c <= 500,0 und vorzugsweise 1,0 <= c <= 10,0 und, vorzugsweise 1,0 <= c <= 4,0, vorzugsweise c= 2,0, 3,0 oder 4,0. Vorzugsweise ist der Abbildungsmaßstab eindeutig vorgegeben, damit die Größe des abgebildeten Zählbereichs und damit das Volumen der Zählkammer in diesem Zählbereich eindeutig angegeben werden kann. Alternativ kann die Zählkammer, bzw. die erste und/oder zweite Begrenzungsfläche, eine Skalierung aufweisen, so dass das genannte Volumen mittels der ebenfalls abgebildeten Skalierung ermittelbar ist. Der abgebildete Bereich ist vorzugsweise gleich dem Zählbereich.

Die Bilderfassungseinrichtung weist vorzugsweise mindestens einen Photodetektor auf, vorzugsweise einen Bilddetektor, oder eine Kamera. Die Bilderfassungseinrichtung weist vorzugsweise einen CCD-Sensor oder einen CMOS-Sensor auf, oder eine Kamera mit einem solchen Sensor. Die Bilderfassungseinrichtung ist vorzugsweise dazu ausgebildet, das elektronisch erfasste Bild in Form von digitalen Daten auszugeben und/oder zu speichern.

Die elektronische Bildauswerteeinrichtung weist vorzugsweise eine elektronische Datenverarbeitungseinrichtung auf, die einen Mikroprozessor und/oder eine CPU, digitale Datenspeicher, Datenschnittstellen und/oder Datenübertragungsmittel aufweisen kann. Die elektronische Bildauswerteeinrichtung weist vorzugsweise einen Programmcode auf, oder eine Software, mit der eine Partikelzählung durchgeführt werden kann, um die in dem mindestens einen Bild abgebildeten Partikel elektronisch zu zählen. Die Zählvorrichtung weist vorzugsweise eine Datenschnittstelleneinrichtung und/oder eine Benutzerschnittstelleneinrichtung, insbesondere eine Anzeigeneinrichtung und/oder Bedienelemente, auf, um die Ergebnisse der Zählung an eine weitere Datenverarbeitungseinrichtung, z.B. einen Computer, oder einen Benutzer auszugeben.
Die Erfindung betrifft ferner ein Verfahren zum Zählen von mikroskopischen Partikeln, insbesondere von biologischen Zellen, unter Verwendung einer erfindungsgemäßen Zählkammereinrichtung und/oder einer erfindungsgemäßen Positioniereinrichtung, und/oder einer erfindungsgemäßen Zählvorrichtung aufweisend die folgenden Schritte:
- Anordnen von einem die mikroskopischen Partikel enthaltenden Lösungsmittel in mindestens einer Zählkammer, insbesondere in der mindestens einen Zählkammer der Zählkammereinrichtung;
- Positionieren der mindestens einen Zählkammer in einem Aufnahmebereich in Bezug auf eine Beleuchtungseinrichtung, insbesondere im Aufnahmebereich der Positioniereinrichtung;
- vorzugsweise: Beleuchten der mindestens einen Zählkammer, vorzugsweise mit mindestens einer elektrischen Lichtquelle und insbesondere gleichzeitig:
- Mikroskopisches Abbilden mindestens eines Zählbereichs der mindestens einen Zählkammer, um mindestens eine Anzahl von in dem mindestens einen Zählbereich enthaltenen mikroskopischen Partikeln zu zählen.
- vorzugsweise: Erfassen des Abbilds des mindestens einen Zählbereichs in mindestens einem Bild mittels einer elektronischen Bilderfassungseinrichtung;
- vorzugsweise: Auswerten des mindestens einen Bildes mittels einer elektronischen Bildverarbeitungseinrichtung, um mindestens eine Anzahl von in mindestens einem Bild abgebildeten Partikeln durch Zählen zu ermitteln.

Durch das erfindungsgemäße Verfahren können Zählvorgänge komfortabel, zuverlässig reproduzierbar und mit hohem Durchsatz durchgeführt werden.

Vorzugsweise sieht das Verfahren zusätzlich einen Schritt zur Reinigung der Zählkammereinrichtung vor, bei dem eine vorteilhafte Gestaltung der erfindungsgemäßen Zählkammereinrichtung genutzt wird: Dabei befindet sich in der ersten Relativposition des ersten und zweiten Teils der Zählkammereinrichtung ein erster Punkt auf der mindestens einen ersten Begrenzungsfläche in einem vorbestimmten Abstand D von einem zweiten Punkt auf der mindestens einen zweiten Begrenzungsfläche, wobei in der ersten Relativposition D=d1, und wobei das erste und das zweite Teil relativ zu einander in einer zweiten Relativposition anordenbar sind, in welcher der Abstand D=d2 größer ist als der Abstand D=d1 in der ersten Relativposition, oder die sich, falls die Relativbewegung eine Schwenkbewegung ist, unter einem Öffnungswinkel mit Bezug auf die ersten Relativposition befindet. Die zusätzlichen Verfahrensschritte sind dann:
- Anordnen der Zählkammereinrichtung in der zweiten Relativposition;
- Reinigen, der mindestens einen Zählkammer der in der zweiten Relativposition angeordneten Zählkammereinrichtung, oder
- Herausnehmen der Zählkammer aus der Zählvorrichtung und Sterilisieren bzw. Autoklavieren der Zählkammer.

Da die erfindungsgemäße Zählkammer in der zweiten Relativposition anordenbar ist, in der die Begrenzungsflächen nach außen exponiert sind, kann in dieser zweiten Relativposition eine effiziente Reinigung erfolgen Mit der erfindungsgemäßen Zählkammereinrichtung wird das Zählen von Partikeln unter Vermeidung des Verbrauchs von zusätzlichen Verbrauchsartikeln möglich, da im Gegensatz zu den bekannte Zählgläsern die erfindungsgemäße Zählkammereinrichtung zur Bildung einer Zählkammer keine Verbrauchsartikel benötigt. Insbesondere eignet sich die erfindungsgemäße Zählkammereinrichtung besonders zum Zählen mit hohem Durchsatz, insbesondere in Kombination mit der erfindungsgemäßen Positioniereinrichtung und/oder der erfindungsgemäßen Zählvorrichtung.

Weitere mögliche bevorzugte Ausgestaltungen des erfindungsgemäßen Verfahrens lassen sich aus der Beschreibung der erfindungsgemäßen Zählkammereinrichtung und der erfindungsgemäßen Positioniereinrichtung und der erfindungsgemäßen Zählvorrichtung und von deren bevorzugten Ausgestaltungen ableiten.

Weitere bevorzugte Ausgestaltungen des erfindungsgemäßen Verfahrens, der erfindungsgemäßen Zählkammereinrichtung, der erfindungsgemäßen Positioniereinrichtung und der erfindungsgemäßen Zählvorrichtung ergeben sich aus der nachfolgenden Beschreibung der Ausführungsbeispiele in Zusammenhang mit den Figuren und deren Beschreibung. Gleiche Bauteile der Ausführungsbeispiele werden im Wesentlichen durch gleiche Bezugszeichen gekennzeichnet, falls dies nicht anders beschrieben wird oder sich nicht anders aus dem Kontext ergibt. Es zeigen:

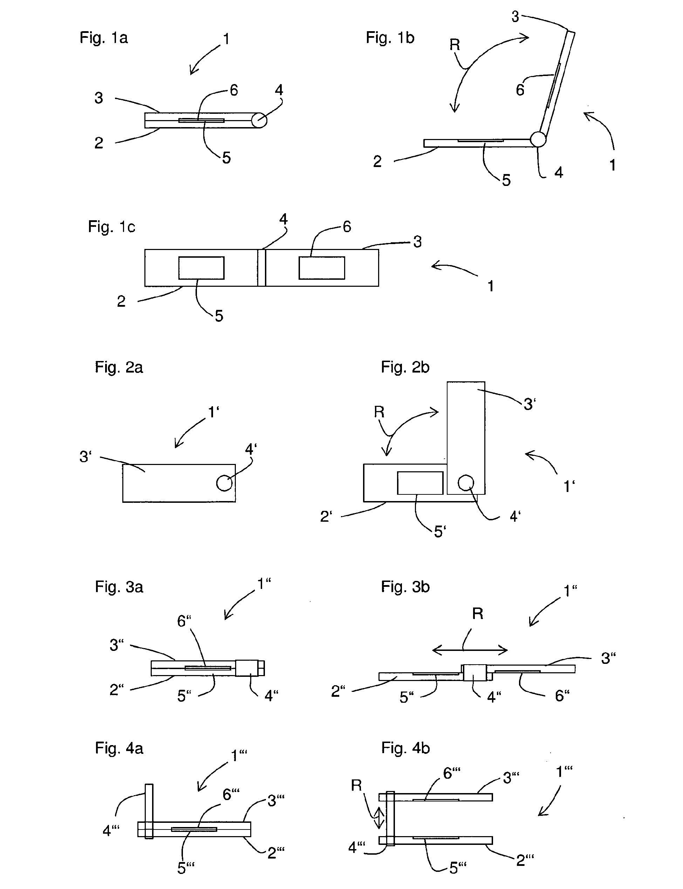

Fig. 1a zeigt ein erstes Ausführungsbeispiel der erfindungsgemäßen Zählkammereinrichtung in einer Seitenansicht, in der ersten Relativposition des hier gegeneinander verschwenkbaren ersten und zweiten Teils.
Fig. 1 b zeigt das erste Ausführungsbeispiel der erfindungsgemäßen Zählkammereinrichtung in einer Seitenansicht, in der zweiten Relativposition.
Fig. 1c zeigt das erste Ausführungsbeispiel der erfindungsgemäßen Zählkammereinrichtung in einer Aufsicht, in einer weiteren, zweiten Relativposition.
Fig. 2a zeigt ein zweites Ausführungsbeispiel der erfindungsgemäßen Zählkammereinrichtung in einer Seitenansicht, in der ersten Relativposition des hier gegeneinander scherenartig verschwenkbaren ersten und zweiten Teils.
Fig. 2b zeigt das zweite Ausführungsbeispiel der erfindungsgemäßen Zählkammereinrichtung in einer Seitenansicht, in der zweiten Relativposition.
Fig. 3a zeigt ein drittes Ausführungsbeispiel der erfindungsgemäßen Zählkammereinrichtung in einer Seitenansicht, in der ersten Relativposition des hier gegeneinander translativ parallel verschiebbaren ersten und zweiten Teils.
Fig. 3b zeigt das dritte Ausführungsbeispiel der erfindungsgemäßen Zählkammereinrichtung in einer Seitenansicht, in der zweiten Relativposition.
Fig. 4a zeigt ein viertes Ausführungsbeispiel der erfindungsgemäßen Zählkammereinrichtung in einer Seitenansicht, in der ersten Relativposition des hier gegeneinander translativ gegeneinander verschiebbaren ersten und zweiten Teils.
Fig. 4b zeigt das vierte Ausführungsbeispiel der erfindungsgemäßen Zählkammereinrichtung in einer Seitenansicht, in der zweiten Relativposition.
Fig. 5a zeigt eine beispielhafte Ausgestaltung des ersten Teils einer erfindungsgemäßen Zählkammereinrichtung in Aufsicht.
Fig. 5b zeigt das erste Teil aus Fig. 5a, geschnitten an der Linie A in Fig. 5a und eine mögliche Ausgestaltung des zweiten Teils, das sich mit dem ersten Teil in der ersten Relativposition befindet, um eine Zählkammer zu bilden.
Fig. 5c zeigt eine beispielhafte besonders bevorzugte Ausgestaltung des ersten und zweiten Teils einer erfindungsgemäßen Zählkammereinrichtung in Seitenansicht, die sich in der ersten Relativposition befindet, um eine Zählkammer zu bilden.
Fig. 6a zeigt ein Ausführungsbeispiel der erfindungsgemäßen Positioniereinrichtung, in der eine erfindungsgemäße Zählkammereinrichtung anordenbar ist, in Seitenansicht.
Fig. 6b zeigt das Ausführungsbeispiel der erfindungsgemäßen Positioniereinrichtung aus Fig. 6a, in der eine erfindungsgemäße Zählkammereinrichtung angeordnet ist, in Seitenansicht.
Fig. 7 zeigt ein Ausführungsbeispiel der erfindungsgemäßen Zählvorrichtung, in der die Positioniereinrichtung aus Fig. 6a angeordnet ist, in der die Zählkammereinrichtung aus Fig. 1 a angeordnet ist.
Fig. 8 zeigt ein Ausführungsbeispiel des erfindungsgemäßen Verfahrens.

Fig. 1 a zeigt die Zählkammereinrichtung 1 in einer Seitenansicht, in der ersten Relativposition des hier gegeneinander rotierbaren plattenförmigen ersten Teils 2 und des plattenförmigen zweiten Teils 3. Das erste Teil 2 weist einen zentralen Bereich 5 auf, der an der Innenseite des ersten Teils zentral vorgesehen ist und in dem mindestens eine erste Begrenzungsfläche angeordnet ist. Das zweite Teil 3 weist einen zentralen Bereich 6 auf, der an der Innenseite des zweiten Teils zentral vorgesehen ist und in dem mindestens eine zweite Begrenzungsfläche angeordnet ist. Die Zählkammereinrichtung 1 weist eine Führungseinrichtung 4 auf, die hier als Scharniereinrichtung 4 ausgeführt ist. Durch das Scharnier sind das erste Teil 2 und das zweite Teil 3 durch eine rotierende Relativbewegung R (siehe Fig. 1 b) gegeneinander bewegbar. Dadurch sind das erste Teil 2 und das zweite Teil 3 zwischen der in Fig. 1 a gezeigten ersten Relativposition und der in Fig. 1 b gezeigten zweiten Relativposition rotierbar. In der ersten Relativposition liegen sich das erste Teil 2 und das zweite Teil 3 gegenüber und kontaktieren sich, indem das erste Teil und das zweite Teil mit ihren Hauptseiten übereinander liegend angeordnet sind. In der zweiten Relativposition sind das erste Teil 2 und das zweite Teil 3 um mehr als 90° gegeneinander geschwenkt, was auch bis zu 180° möglich ist, wie in Fig. 1c gezeigt ist. In einer solchen zweiten Relativposition können die zentralen Bereiche 5 und 6, die gemeinsam die Zählkammern ausbilden, effizient gereinigt werden, oder zu Sterilisierzwecken autoklaviert werden. Die Zählkammern dienen zur Aufnahme des die Partikel enthaltenden Lösungsmittels, die durch die flache Gestaltung der Zählkammern horizontal, also parallel zu den Hauptseiten des ersten und zweiten Teils in Fig. 1a verteilt werden. Das erste und zweite Teil ist zumindest in den zentralen Bereichen 5 und 6 transparent, wobei mindestens eine der ersten und zweiten Begrenzungsflächen (nicht gezeigt) mindestens ein optisches Fenster der mindestens einen Zählkammer bildet, und die Zählkammereinrichtung dazu eingerichtet ist, dass die Partikel durch das mindestens eine optische Fenster mikroskopisch abbildbar sind.

Fig. 2a zeigt die Zählkammereinrichtung 1' in einer Seitenansicht, in der ersten Relativposition des hier gegeneinander scherenartig, also parallel zu ihren Hauptseiten rotierbaren plattenförmigen ersten Teils 2' und des plattenförmigen zweiten Teils 3'. Das erste Teil 2' weist einen zentralen Bereich 5' auf, der an der Innenseite des ersten Teils zentral vorgesehen ist und in dem mindestens eine erste Begrenzungsfläche angeordnet ist. Das zweite Teil 3' weist einen zentralen Bereich 6' auf, der an der Innenseite des zweiten Teils zentral vorgesehen ist und in dem mindestens eine zweite Begrenzungsfläche angeordnet ist. Die Zählkammereinrichtung 1' weist eine Führungseinrichtung 4' auf, die hier als Schwenkeinrichtung 4' ausgeführt ist. Durch das Scharnier sind das erste Teil 2' und das zweite Teil 3' durch eine rotierende Relativbewegung R (siehe Fig. 2b) gegeneinander bewegbar. Dadurch sind das erste Teil 2' und das zweite Teil 3' zwischen der in Fig. 2a gezeigten ersten Relativposition und der in Fig. 2b gezeigten zweiten Relativposition rotierbar. In der ersten Relativposition liegen sich das erste Teil 2' und das zweite Teil 3' gegenüber und kontaktieren sich, indem das erste Teil und das zweite Teil mit ihren Hauptseiten übereinander liegend angeordnet sind. In der zweiten Relativposition sind das erste Teil 2' und das zweite Teil 3' um ca. 90° gegeneinander geschwenkt, was auch bis zu 180° möglich ist. In einer solchen zweiten Relativposition können die zentralen Bereiche 5' und 6', die gemeinsam die Zählkammern ausbilden, effizient gereinigt werden, oder zu Sterilisierzwecken autoklaviert werden. Die Zählkammern dienen zur Aufnahme des die Partikel enthaltenden Lösungsmittels, die durch die flache Gestaltung der Zählkammern horizontal, also parallel zu den Hauptseiten des ersten und zweiten Teils in Fig. 2a verteilt werden. Das erste und zweite Teil ist zumindest in den zentralen Bereichen 5' und 6' transparent, wobei mindestens eine der ersten und zweiten Begrenzungsflächen (nicht gezeigt) mindestens ein optisches Fenster der mindestens einen Zählkammer bildet, und die Zählkammereinrichtung dazu eingerichtet ist, dass die Partikel durch das mindestens eine optische Fenster mikroskopisch abbildbar sind.

Fig. 3a zeigt die Zählkammereinrichtung 1" in einer Seitenansicht, in der ersten Relativposition des hier gegeneinander parallel zu ihren Hauptseiten translativ verschiebbaren plattenförmigen ersten Teils 2" und des plattenförmigen zweiten Teils 3". Das erste Teil 2" weist einen zentralen Bereich 5" auf, der an der Innenseite des ersten Teils zentral vorgesehen ist und in dem mindestens eine erste Begrenzungsfläche angeordnet ist. Das zweite Teil 3" weist einen zentralen Bereich 6" auf, der an der Innenseite des zweiten Teils zentral vorgesehen ist und in dem mindestens eine zweite Begrenzungsfläche angeordnet ist. Die Zählkammereinrichtung 1" weist eine Führungseinrichtung 4" auf, die hier als Translationsführungseinrichtung, z.B. als Spangenelement, 4" ausgeführt ist. Durch das Spangenelement sind das erste Teil 2" und das zweite Teil 3" durch eine translative Relativbewegung R (siehe Fig. 3b) gegeneinander bewegbar. Dadurch sind das erste Teil 2" und das zweite Teil 3" zwischen der in Fig. 3a gezeigten ersten Relativposition und der in Fig. 3b gezeigten zweiten Relativposition translativ verschiebbar. In der ersten Relativposition liegen sich das erste Teil 2" und das zweite Teil 3" gegenüber und kontaktieren sich, indem das erste Teil und das zweite Teil mit ihren Hauptseiten übereinander liegend angeordnet sind. In der zweiten Relativposition sind das erste Teil 2" und das zweite Teil 3" um ca. eine dreiviertel Gesamtlänge gegeneinander verschoben, so dass die zentralen Bereiche 5" und 6" nach außen exponiert und zugänglich sind. In einer solchen zweiten Relativposition können die zentralen Bereiche 5" und 6", die gemeinsam die Zählkammern ausbilden, effizient gereinigt werden, oder zu Sterilisierzwecken autoklaviert werden. Die Zählkammern dienen zur Aufnahme des die Partikel enthaltenden Lösungsmittels, die durch die flache Gestaltung der Zählkammern horizontal, also parallel zu den Hauptseiten des ersten und zweiten Teils in Fig. 3a verteilt werden. Das erste und zweite Teil ist zumindest in den zentralen Bereichen 5" und 6" transparent, wobei mindestens eine der ersten und zweiten Begrenzungsflächen (nicht gezeigt) mindestens ein optisches Fenster der mindestens einen Zählkammer bildet, und die Zählkammereinrichtung dazu eingerichtet ist, dass die Partikel durch das mindestens eine optische Fenster mikroskopisch abbildbar sind.

Fig. 4a zeigt die Zählkammereinrichtung 1"' in einer Seitenansicht, in der ersten Relativposition des hier gegeneinander senkrecht zu ihren Hauptseiten translativ verschiebbaren plattenförmigen ersten Teils 2"' und des plattenförmigen zweiten Teils 3"'. Das erste Teil 2"' weist einen zentralen Bereich 5"' auf, der an der Innenseite des ersten Teils zentral vorgesehen ist und in dem mindestens eine erste Begrenzungsfläche angeordnet ist. Das zweite Teil 3"' weist einen zentralen Bereich 6"' auf, der an der Innenseite des zweiten Teils zentral vorgesehen ist und in dem mindestens eine zweite Begrenzungsfläche angeordnet ist. Die Zählkammereinrichtung 1"' weist eine Führungseinrichtung 4"' auf, die hier als Translationsführungseinrichtung, z.B. als profilierter Führungsstift 4" des ersten Teils ausgeführt ist, der in einer geeignete profilierten Öffnung des zweiten Teils gleitet. Durch die Translationsführungseinrichtung sind das erste Teil 2"' und das zweite Teil 3"' durch eine translative Relativbewegung R (siehe Fig. 4b) gegeneinander bewegbar. Dadurch sind das erste Teil 2"' und das zweite Teil 3"' zwischen der in Fig. 4a gezeigten ersten Relativposition und der in Fig. 4b gezeigten zweiten Relativposition translativ verschiebbar. In der ersten und zweiten Relativposition liegen sich das erste Teil 2"' und das zweite Teil 3" gegenüber, kontaktieren sich aber nur in der ersten Relativposition, indem das erste Teil und das zweite Teil mit ihren Hauptseiten übereinander liegend angeordnet sind. In der zweiten Relativposition sind das erste Teil 2" und das zweite Teil 3" um ca. eine dreiviertel Gesamtlänge gegeneinander senkrecht verschoben, so dass die zentralen Bereiche 5"' und 6"' nach außen exponiert und zugänglich sind. In einer solchen zweiten Relativposition können die zentralen Bereiche 5"' und 6"', die gemeinsam die Zählkammern ausbilden, effizient gereinigt werden, oder zu Sterilisierzwecken autoklaviert werden. Die Zählkammern dienen zur Aufnahme des die Partikel enthaltenden Lösungsmittels, die durch die flache Gestaltung der Zählkammern horizontal, also parallel zu den Hauptseiten des ersten und zweiten Teils in Fig. 4a verteilt werden. Das erste und zweite Teil ist zumindest in den zentralen Bereichen 5"' und 6"' transparent, wobei mindestens eine der ersten und zweiten Begrenzungsflächen (nicht gezeigt) mindestens ein optisches Fenster der mindestens einen Zählkammer bildet, und die Zählkammereinrichtung dazu eingerichtet ist, dass die Partikel durch das mindestens eine optische Fenster mikroskopisch abbildbar sind.

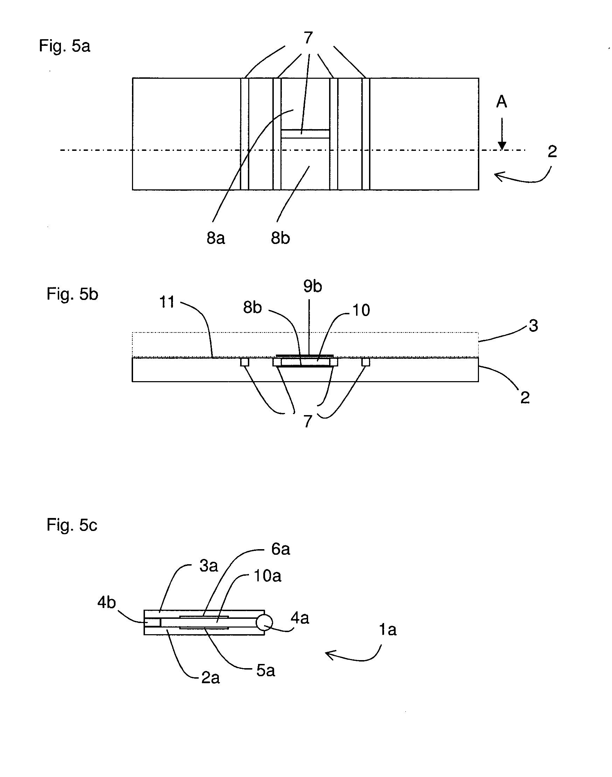

Fig. 5a zeigt eine beispielhafte Ausgestaltung des ersten Teils 2 einer erfindungsgemäßen Zählkammereinrichtung in Aufsicht. Das erste Teil 2 weist im zentralen Bereich 5 ein Kanalstruktur auf, welche die zentral an der Innenseite angeordneten Zählkammern, bzw. die beiden ersten Begrenzungsflächen 8a und 8b mit dem Randbereich des ersten Teils 2 verbindet. Durch diese Kanalstruktur kann das Lösungsmittel mit den Partikeln durch Kapillarkräfte in die Zählkammern transportiert werden.

Fig. 5b zeigt das erste Teil 2 aus Fig. 5a, geschnitten an der Linie A in Fig. 5a und eine mögliche Ausgestaltung des zweiten Teils, das sich mit dem ersten Teil in der ersten Relativposition befindet, um eine Zählkammer zu bilden. Die Zählkammer 10 ergibt sich, indem die planare erste Begrenzungsfläche 8b gegenüber der als Kontaktbereich 11 ausgebildeten Innenseite 11 des ersten Teils nach unten versenkt angeordnet ist und die Zählkammer 10 nach unten begrenzt. Die dieser ersten Begrenzungsfläche 8b gegenüberliegende planare zweite Begrenzungsfläche 9b des zweiten Teils begrenzt die Zählkammer 10 nach oben. Da das wässrige Lösungsmittel durch dessen Oberflächenspannung und die Kapillarkräfte in der Zählkammer gehalten wird, sind keine seitlichen Begrenzungen für die Zählkammer erforderlich.

Fig. 5c zeigt eine besonders bevorzugte Ausgestaltung einer erfindungsgemäßen Zählkammereinrichtung 1 a. Diese weist ein plattenförmiges erstes Teil 2a auf und ein plattenförmiges zweites Teil 3a, die über eine Scharniereinrichtung 4a schenkbar miteinander verbunden sind. Das erste Teil 2a weist an seiner Innenseite die Begrenzungsfläche 5a auf, die koplanar mit der planaren Ebene der Innenseite des ersten Teils liegt. Das zweite Teil 3a weist an seiner Innenseite die Begrenzungsfläche 6a auf, die koplanar mit der planaren Ebene der Innenseite des zweiten Teils liegt. In der gezeigten ersten Relativposition liegen die Begrenzungsflächen parallel zueinander und gegenüber. Die Zählkammereinrichtung weist ein Abstandselement 4b auf, an dem durch welches das erste und zweite Teil in der ersten Relativposition auf Abstand gehalten werden. Der Abstand kann d1 sein, z.B. d1=0,1 mm. Das Abstandselement kann Teil des ersten oder zweiten Teils sein. Es können auch mehrere Abstandselemente vorgesehen sein, die gemeinsam den Abstand bewirken. Das Abstandselement könnte alternativ (nicht gezeigt) auch in die Scharniereinrichtung integriert sein. Zwischen den beiden Innenseiten des ersten und zweiten Teils und somit zwischen den Begrenzungsflächen 5a und 6a ist ein Spalt gebildet, der die Zählkammer 10a bildet. Die Partikelsuspension wird im Fall der Befüllung der Zählkammer durch Kapillarkräfte oder Oberflächenspannung zwischen den Begrenzungsflächen gehalten.

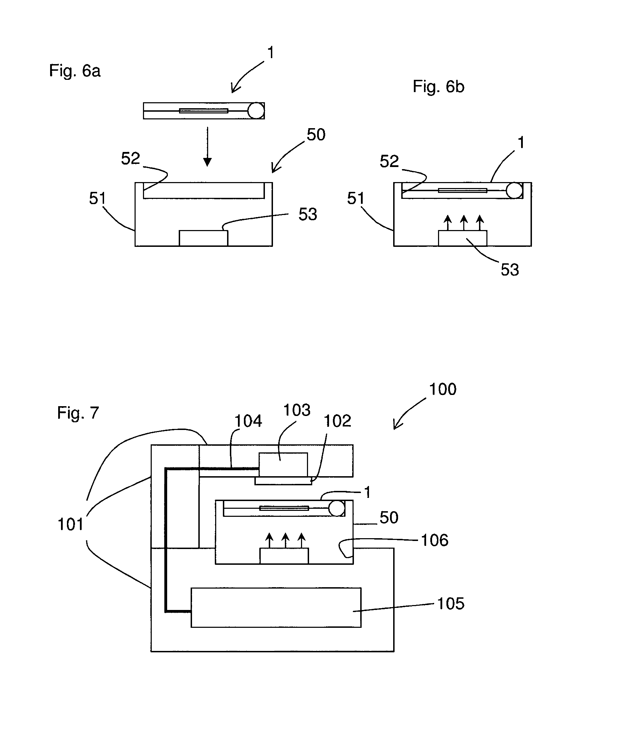

Fig. 6a zeigt ein Ausführungsbeispiel der erfindungsgemäßen Positioniereinrichtung 50, in der eine erfindungsgemäße Zählkammereinrichtung 1 aus Fig. 1 a anordenbar ist, in Seitenansicht. Die Positioniereinrichtung 50 weist ein als quaderförmiger Block 1 ausgeführtes Basisteil auf, in dessen Oberseite ein als quaderförmige Aufnahme 52 ausgebildete Aussparung den Aufnahmebereich zur Aufnahme der genau passenden Zählkammereinrichtung 1 dient, wobei alternativ auch eine andere Zählkammereinrichtung 1', 1", 1"' eingepasst worden sein könnte. Durch den Aufnahmebereich 52 wird die Zählkammereinrichtung immer eindeutig reproduzierbar in der Beleuchtungsposition angeordnet, in der die elektrische LED 53 die für eine Durchlichtanordnung ausgebildete Zählkammereinrichtung von unten beleuchtet (Fig. 6b).

Fig. 7 zeigt ein Ausführungsbeispiel der erfindungsgemäßen Zählvorrichtung 100, in der die Positioniereinrichtung 50 aus Fig. 6a angeordnet ist, in der die Zählkammereinrichtung 1 aus Fig. 1a angeordnet ist. Die Zählvorrichtung 100 weist ein Basisteil 101 auf. Dieses weist einen Aufnahmebereich 106 auf, in dem die Positioniereinrichtung 50 immer eindeutig reproduzierbar in einer Abbildungsposition senkrecht gegenüberliegend der Abbildungseinrichtung 102 angeordnet ist, in einer Durchlichtanordnung, bei der die LED 53 senkrecht durch die Zählkammer und über die Abbildungseinrichtung 102 in die Bilderfassungseinrichtung 103, z.B. ein CMOS-Sensor leuchtet. Die Abbildungseinrichtung 102 und die Bilderfassungseinrichtung 103 sind Bestandteil der Zählvorrichtung 100. Ein in der Zählkammer gelegner Zählbereich, der kleiner ist als das Volumen unter einer Begrenzungsfläche 9b, wird in ein Bild abgebildet. Die Bilderfassungseinrichtung 103 liefert über eine Datenübertragungseinrichtung, z.B. das Kabel 104, die das Bild repräsentierenden Daten an die Bildauswerteeinrichtung 105, die als Bildverarbeitungseinrichtung dient und die die im Bild gezeigten Partikel zählt. Das Ergebnis wird ausgegeben.

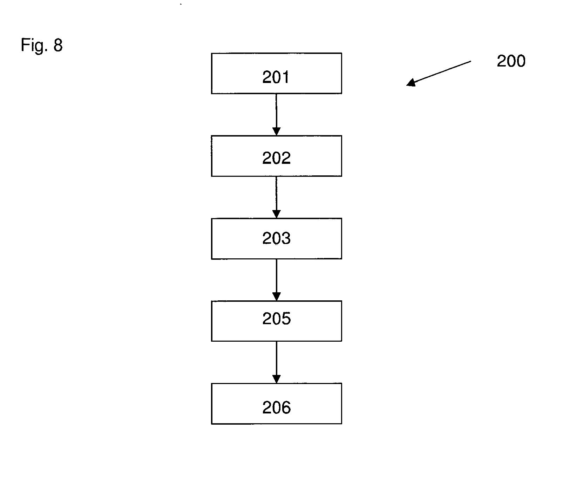

Fig. 8 zeigt ein erfindungsgemäßes Verfahren 200 mit den Schritten: - Anordnen von einem die mikroskopischen Partikel enthaltenden Lösungsmittel in mindestens einer Zählkammer, insbesondere in der mindestens einen Zählkammer der Zählkammereinrichtung (201);- Positionieren der mindestens einen Zählkammer in einem Aufnahmebereich in Bezug auf eine Beleuchtungseinrichtung, insbesondere im Aufnahmebereich der Positioniereinrichtung (202); -Mikroskopisches Abbilden mindestens eines Zählbereichs der mindestens einen Zählkammer, um mindestens eine Anzahl von in dem mindestens einen Zählbereich enthaltenen mikroskopischen Partikeln zu zählen (203); -Erfassen des mindestens einen abgebildeten Zählbereichs mittels einer Bilderfassungseinrichtung als mindestens ein Bild (204); - Auswerten des mindestens einen Bildes mittels einer Auswerteeinrichtung zum Zählen mindestens einer Anzahl von in dem mindestens einen Bild enthaltenen Partikel.

## Patentansprüche

1. Zählkammereinrichtung (1; 1'; 1", 1"'; 1 a) für das optische Zählen von in einem Lösungsmittel suspendierten mikroskopischen Partikeln, insbesondere biologischen Zellen, aufweisend
ein erstes Teil (2; 2'; 2", 2"'; 2a), das mindestens eine erste Begrenzungsfläche aufweist,
ein zweites Teil (3; 3'; 3", 3"'; 3a), das mindestens eine zweite Begrenzungsfläche aufweist,
eine Führungseinrichtung (4; 4'; 4", 4"'; 4a), durch die das erste und das zweite Teil zumindest in einer ersten Relativposition und einer zweiten Relativposition relativ zueinander positionierbar sind,
wobei in der ersten Relativposition die mindestens eine erste und zweite Begrenzungsfläche dazu angeordnet sind, mindestens eine Zählkammer zu begrenzen, die zur Aufnahme des die Partikel enthaltenden Lösungsmittels dient,
wobei mindestens eine der ersten und zweiten Begrenzungsflächen mindestens ein optisches Fenster der mindestens einen Zählkammer bildet, und die Zählkammereinrichtung dazu eingerichtet ist, dass die Partikel durch das mindestens eine optische Fenster mikroskopisch abbildbar sind.

2. Zählkammereinrichtung gemäß Anspruch 1, **dadurch gekennzeichnet, dass** die mindestens eine erste und zweite Begrenzungsfläche jeweils planar ausgebildet sind und die Zählkammereinrichtung dazu ausgebildet ist, dass mindestens eine erste und eine zweite Begrenzungsfläche in der ersten Relativposition planparallel angeordnet sind in einem vorbestimmten Abstand d1 gehalten werden.

3. Zählkammereinrichtung gemäß Anspruch 2, **dadurch gekennzeichnet, dass** 0,01 mm <= d1 <= 0,20 mm.

4. Zählkammereinrichtung gemäß Anspruch 2 oder 3, **dadurch gekennzeichnet, dass** eine erste Begrenzungsfläche und eine zweite Begrenzungsfläche vorgesehen sind, die jeweils ein optisches Fenster bilden und sich in der ersten Relativposition gegenüberliegen, so dass ein senkrecht durch das optische Fenster der ersten Begrenzungsfläche tretendes Licht auch durch das optische Fenster der zweiten Begrenzungsfläche tritt.

5. Zählkammereinrichtung gemäß einem der vorherigen Ansprüche, **dadurch gekennzeichnet, dass** die Zählkammereinrichtung und das mindestens eine optische Fenster so eingerichtet sind, dass durch mindestens ein optisches Fenster mindestens ein Zählbereich der Zählkammer in mindestens einem Bild mikroskopisch abbildbar ist, so dass das Zählen der in dem Bild gezeigten mikroskopischen Partikel ermöglicht wird.

6. Zählkammereinrichtung gemäß einem der vorherigen Ansprüche, **dadurch gekennzeichnet, dass** die Zählkammereinrichtung und die von der mindestens einen ersten und zweiten Begrenzungsfläche begrenzte mindestens eine Zählkammer dazu ausgebildet sind, in der ersten Relativposition ein Volumen V eines wässrigen Lösungsmittels durch Kapillarkräfte zwischen der ersten und zweiten Begrenzungsfläche zu halten, wobei 1,0 µl <= V <= 100 µl.

7. Zählkammereinrichtung gemäß einem der vorherigen Ansprüche, **dadurch gekennzeichnet, dass** die Führungseinrichtung eine Schwenkeinrichtung ist, durch die das erste und das zweite Teil schwenkbar miteinander verbunden sind.

8. Zählkammereinrichtung gemäß einem der vorherigen Ansprüche, **dadurch gekennzeichnet, dass** die Zählkammereinrichtung zu Sterilisierzwecken autoklavierbar ausgebildet ist.

9. Positioniereinrichtung (50) zur Positionierung einer Zählkammereinrichtung, die gemäß einem der Ansprüche 1 bis 8 ausgebildet ist, in einer vorbestimmten Beleuchtungsposition, aufweisend
ein Basisteil, das einen Aufnahmebereich zur Aufnahme und Positionierung mindestens einer Zählkammereinrichtung in der Beleuchtungsposition aufweist, die gemäß einem der Ansprüche 1 bis 8 ausgebildet und in der ersten Relativposition angeordnet ist,
wobei die Positioniereinrichtung eine Beleuchtungseinrichtung aufweist und
der Aufnahmebereich und die Beleuchtungseinrichtung so ausgebildet und relativ zueinander so angeordnet sind, dass in der Beleuchtungsposition die mindestens eine Zählkammer der Zählkammereinrichtung durch die Beleuchtungseinrichtung beleuchtbar ist, wenn die Zählkammereinrichtung im Aufnahmebereich angeordnet ist.

10. Positioniereinrichtung gemäß Anspruch 9, **dadurch gekennzeichnet, dass** die Beleuchtungseinrichtung mindestens eine Lichtquelle aufweist, insbesondere eine LED, die in der Beleuchtungsposition gegenüberliegend des mindestens einen optischen Fensters angeordnet ist und mit der in der Beleuchtungsposition die mindestens eine Zählkammer der Zählkammereinrichtung beleuchtbar ist.

11. Positioniereinrichtung gemäß Anspruch 9 oder 10, **dadurch gekennzeichnet, dass** der Aufnahmebereich sich entlang einer Ebene erstreckt, entlang der sich auch das mindestens eine optische Fenster der Zählkammereinrichtung in der Beleuchtungsposition erstreckt, wobei die Beleuchtungseinrichtung dazu eingerichtet ist, ein kollimiertes Licht senkrecht zu dieser Ebene auszusenden.

12. Zählvorrichtung (100) zum Zählen von mikroskopischen Partikeln, insbesondere biologischen Zellen, die in einem Lösungsmittel suspendiert sind, das in der mindestens einen Zählkammer einer Zählkammereinrichtung angeordnet ist, die insbesondere gemäß einem der Ansprüche 1 bis 8 ausgebildet ist, wobei die Zählvorrichtung aufweist:
eine Positioniereinrichtung gemäß einem der Ansprüche 9 bis 11 und/oder eine Zählkammereinrichtung gemäß einem der Ansprüche 1 bis 8,
eine Abbildungseinrichtung zum mikroskopischen Abbilden mindestens eines Zählbereichs der mindestens einen Zählkammer,
eine Bilderfassungseinrichtung zum Erfassen des mindestens einen Zählbereichs in mindestens einem Bild,
eine elektronische Bildauswerteeinrichtung, durch die das mindestens eine Bild auswertbar ist, um mindestens eine Anzahl von in mindestens einem Bild abgebildeten Partikeln durch Zählen zu ermitteln.

13. Zählvorrichtung gemäß Anspruch 12, **dadurch gekennzeichnet, dass** die Positioniereinrichtung und/oder die Zählkammereinrichtung ein modulares Bauteil ist, das insbesondere vom Benutzer einhändig transportabel ist.

14. Verfahren (200) zum Zählen von mikroskopischen Partikeln, insbesondere von biologischen Zellen, unter Verwendung einer Zählkammereinrichtung gemäß Anspruch 1 bis 8 und/oder einer Positioniereinrichtung gemäß Anspruch 9 bis 11, aufweisend die folgenden Schritte:
- Anordnen von einem die mikroskopischen Partikel enthaltenden Lösungsmittel in mindestens einer Zählkammer, insbesondere in der mindestens einen Zählkammer der Zählkammereinrichtung;
- Positionieren der mindestens einen Zählkammer in einem Aufnahmebereich in Bezug auf eine Beleuchtungseinrichtung, insbesondere im Aufnahmebereich der Positioniereinrichtung;
- Mikroskopisches Abbilden mindestens eines Zählbereichs der mindestens einen Zählkammer, um mindestens eine Anzahl von in dem mindestens einen Zählbereich enthaltenen mikroskopischen Partikeln zu zählen.
- Vorzugsweise: Reinigen und/oder Sterilisieren, insbesondere Autoklavieren der Zählkammereinrichtung.

15. Verfahren gemäß Anspruch 14 zum Zählen von mikroskopischen Partikeln, insbesondere von biologischen Zellen, unter Verwendung einer Zählkammereinrichtung gemäß Anspruch 1 bis 8, wobei sich in der ersten Relativposition des ersten und zweiten Teils der Zählkammereinrichtung ein erster Punkt auf der mindestens einen ersten Begrenzungsfläche in einem vorbestimmten Abstand D von einem zweiten Punkt auf der mindestens einen zweiten Begrenzungsfläche befindet, wobei in der ersten Relativposition D=d1, und wobei das erste und das zweite Teil relativ zu einander in einer zweiten Relativposition anordenbar sind, in welcher der Abstand D=d2 größer ist als der Abstand D=d1 in der ersten Relativposition, aufweisend die Schritte:
- Anordnen der Zählkammereinrichtung in der zweiten Relativposition;
- Entnehmen der Zählkammer aus der Zählvorrichtung.
- Sterilisieren der mindestens einen Zählkammer der in der zweiten Relativposition angeordneten Zählkammereinrichtung, insbesondere durch Autoklavieren.
